# EUROPEAN PATENT APPLICATION

(11) **EP 2 579 179 A1**
(43) Date of publication of application: **10.04.2013**
(21) Application number: 12187086.9
(22) Date of filing: 03.10.2012
(51) Int. Cl.: G06F 21/34, G06F 21/62

(54) **Electronic authorization system and method**

(30) Priority: 04.10.2011 TR 201109816
(71) Applicant: Aselsan Elektronik Sanayi ve Ticaret Anonim Sirketi, 06370 Ankara (TR)
(72) Inventor: Erkan, Hamdi, 06370 Ankara (TR); Yazici, Ali, 06370 Ankara (TR); Temurcu, Bikem, 06370 Ankara (TR)
(74) Representative: Dericioglu Kurt, Ekin

(57) **Abstract**

The present invention relates to systems having multiple operation and security modes, in particular cryptographic devices used in data encryption and electronic identity modules, such as chip cards, with electronic memories activating these systems. An electronic authorisation system comprising a removable memory unit (2), a data field (3) and an authorization unit (4) as well as a corresponding method are described. The system and method eliminate the requirement of using different electronic identity modules (EIM) by different users or work groups in order to securely operate the device. A single identity module allows authorization to be quickly carried out based on passwords only, subsequent to which the appropriate mode and security level options are set on the device.

## Description

### Field of the Invention

The present invention relates to systems having multiple operation and security modes, especially cryptographical devices used in data encryption and chip cards (modules) with electronic memories activating these systems.

### Background of the Invention

Today, information theft has become a serious problem and the fact that the systems have increasingly become smaller and compact by means of the technological advances has facilitated for example direct physical theft of a large amount of information at one single time. In cases where physical systems cannot be reached, it is occasionally possible to access data that are kept or transmitted by a network such as Internet through various ways. Hardware or software encryption devices have been developed for storing especially personal information of great importance or information, which may pose danger in case a stranger gets hold of it, in an electronic medium.

Software encryption devices encrypt an electronic data by using a determined cryptology algorithm by running and operating specific computer software by a processor. Occasionally use of more than one algorithm or running a different function on the same device may be required. With the different authorization requirements for different features coming with these systems, software based systems having multiple operation and security modes are needed. In today's technology, use of these kinds of devices is rapidly increasing. In these systems, wherein different features are collected in a single device by using the same hardware with only a software change, selection of the multiple mode which is compatible with the system or which is desired can be made by different methods.

In one of the mode selection methods used today, the software that is run in the device is changed and updated. In such a method, connection (wired or wireless) is required to another system which can program the device and generally such a process takes time. This method is not suitable for changing mode rapidly.

In another mode selection method used nowadays, configuration adjustments are made by means of another console that will be connected again to the device. This method also requires connection (wired or wireless) to another console or computer which will be able to carry out adjustments of the device. There might not always be such a device available nearby and when another change is required after the mode is changed, the device and the authorized personnel should be located nearby. For these reasons, this method may not be suitable for changing mode rapidly.

In another method employed nowadays, Electronic Identity Module (EIM) hardware are used which are activated by a password with the purpose of multiple security selection in systems supporting software based multiple operation modes. These hardware are chips which include an electronic memory thereon and which are generally placed on plastic plates with the size of identity cards and which extend outward by means of metal contacts. By using EIM modules having different authorization levels, different security levels can be activated on the device and access to different security fields can be possible. In this method, a different EIM module is required for each authorization level (for each authorization in the work group) for authorization purposes. Generally device access authorizations are classified with three or four different authorization levels, but use of a plurality of EIM modules brings forth difficulties of use to the users.

For example, occasionally more than one EIM module are required to be used for carrying out security configuration of the device and for operating the device, or an EIM module in an upper level is required to be used in the case that the device is locked and becomes inoperable due to an incorrect password input. Since the location of the device and the location where the EIM modules with higher authorization level are stored may be different from each other, it may be difficult to make the device operable again. With the authorization made in systems using such standard EIM modules, access can be authorized only to certain fields located on the module. Enabling use of different operation modes and different security levels on the device on which the module is connected without requiring any software change or configuration change on the device is not possible.

Great Britain patent document no. GB 2454792 discloses a terminal having a plurality of domains, to which access is controlled by the presence of a removable attachment, such as a SIM card or UICC; wherein authorization data or related information is stored on a removable storage device; and if the verification test generates a positive result, the removable storage device provides an indication of whether the user is authorized to access these domains.

### Summary of the Invention

The objective of the present invention is to provide an electronic authorization system and method which eliminate the requirement of using a different electronic identity module (EIM) in order to operate the device in case of any security violation, and which provide rapid authorization by only passwords.

Another objective of the present invention is to provide an electronic authorization system and method which eliminate the requirement of using a plurality of electronic identity modules (EIM) for a work group and thereby enabling cost saving.

A further objective of the present invention is to provide an electronic authorization system and method, which authorize with a single type of electronic identity module (EIM) the mode and security level options on a device by different passwords, and enable to activate different mode and options for different users.

### Detailed Description of the Invention

An electronic authorization system and method developed to fulfill the objective of the present invention is illustrated in the accompanying figures, in which:
Figure 1 is the schematic view of the inventive electronic authorization system.
Figure 2 is the operation flowchart of the inventive electronic authorization method.

The components in the figures are assigned reference numerals as follows:
1. Electronic authorization system
2. Memory unit
3. Data field
4. Authorization unit
5. Processing unit
6. Cryptographic encryption device

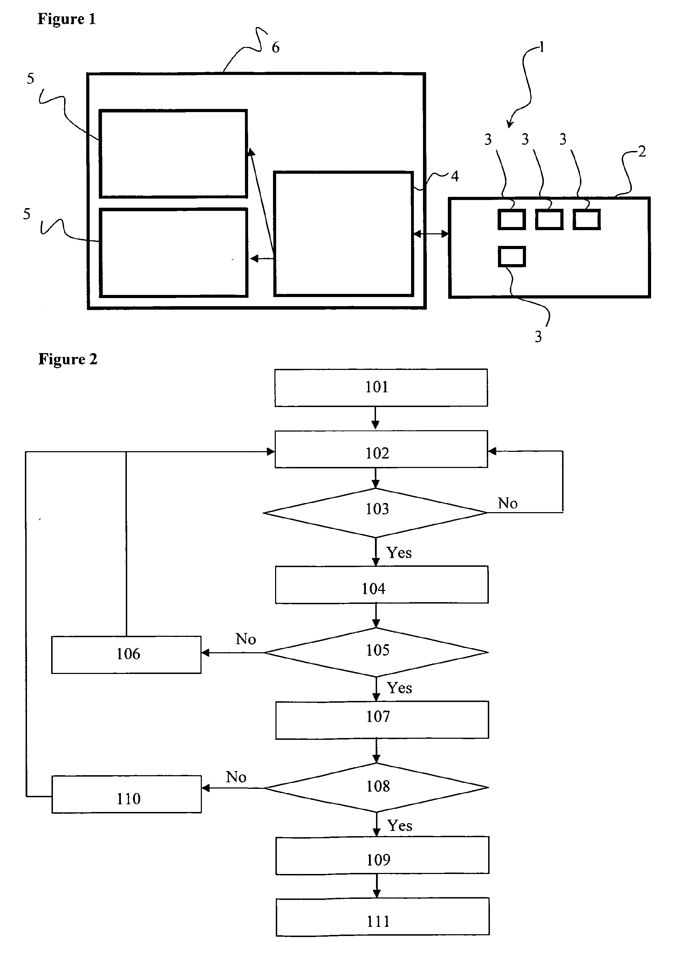

An electronic authorization system and method; which authorizes with a single type of electronic identity module (EIM) the mode and security level options on a device by different passwords, and enables to activate different mode and options for different users; comprises
- at least one cryptographic encryption device (6) which is adapted to perform the cryptographic encryption processes according to specific algorithms and which has input/output systems such as a monitor, keyboard, printer;
- at least one processing unit (5) which is provided on the cryptographic encryption device (6) and is adapted to perform cryptographic encryption processes,
- at least one removable memory unit (2) which is used in user verification as electronic identity module (EIM), and which has at least one data field (3) adapted such that user name and password, operation mode information, security features and the related crypto keys of at least one user can be saved thereon,
- at least one authorization unit (4); which is adapted to read the operation mode information, security level and the related crypto keys from the data field concerning verification of the user whose password is kept in the data field (3), organize operation of the processing unit (5) according to them and authorize the user accordingly. (Figure 1)

In a preferred embodiment of the invention, the memory unit (2) is adapted to be activated only after mutual cryptographic identity verification with the authorization unit (4) located on the cryptographic encryption device (6) in which it will be employed.

The authorization unit (4) is preferably adapted to transmit the user name/password pair input via the input/output units connected to the cryptographic encryption device (6) to the memory unit (2).

In a preferred embodiment of the invention, the memory unit (2) is adapted to keep the user name and password, operation mode information, security level and related crypto keys determined specifically for each user in the related data field (3) in an encrypted form by different keys; and to allow access to the information related to the user only if the user name and password coming from the authorization unit (4) agree with the ones in the data field; and it has cryptographic security mechanisms.

In a preferred embodiment of the invention, the memory unit (2) is a hardware module having a data field (3) comprising a 1Kbit-256Kbit EEPROM memory.

In a preferred embodiment of the invention, the memory unit (2) is connected with the authorization unit (4) via electrical contacts. This memory unit (2) is preferably a chip card.

At least one processing unit (5) provided on the cryptographic encryption device (6) is a processor which performs a hardware and/or software encryption process.

In a preferred embodiment of the invention, the authorization unit (4) is adapted to configure and activate the desired algorithm(s) in the processing unit (5) so as to perform the operations authorized by the operation mode information, security features and related crypto keys which can be accessed and read by means of user name/password pair verification in the memory unit (2). As all this information is stored in the memory unit (2) in an encrypted form, even if they are read somehow, since how the functions of the processing unit (5) will be configured cannot be read without the user verification by the memory unit (2), the processing unit (5) will not be configured and an unauthorized user will not be able to access these features.

The electronic authorization method (100) developed to fulfill the objective of the present invention essentially comprises the steps of
- password/user name, operation mode information, security features/levels and related crypto keys specific to various users being encrypted by a secure cryptography center and saved in at least one memory unit (2) (101),
- the authorization unit (4) sending the prompt "connect memory unit (2)" to the cryptographic encryption device (6) interfaces (102),
- is the memory unit (2) connected to the authorization unit (4)? (103),
- performing mutual cryptographic identity verification between the memory unit (2) and the authorization unit (4) (104),
- is the cryptographic identity verification successful? (105),
- the authorization unit (4) sending the warning "invalid memory unit (2)" to the cryptographic encryption device (6) interfaces (106),
- sending the user name/password pair input via the cryptographic encryption device (6) interfaces to the memory unit (2) (107),
- is the user name/password pair correct? (108),
- crypto of the information in the related data field (3) being decrypted by the memory unit (2) and allowing access to the information in this field (109),
- the authorization unit (4) sending the warning "unauthorized memory unit (2)" to the cryptographic encryption device (6) interfaces (110),
- configuring the processing unit (5) such that it will perform the functions that can be used by the authorization given to this user in advance, by means of the operation mode information, security features/levels and related crypto keys read from the memory unit (2) (111). (Figure 2)

Firstly, the memory units (2) should be programmed by a secure cryptography center. This center has the software and hardware blocks prepared in accordance with the cryptographic security criteria, and is located at a completely secure location. The memory units (2) are programmed in accordance with the cryptographic security mechanisms by the authorized persons in compliance with the features of the operation and security mode - determined by the said center - of the software based devices having multiple operation and security modes.

In the stage of programming, different data fields are formed within the memory units (2); which fields are designated specific to each user, protected by different passwords and encrypted by different keys. Each data field includes information in encrypted form related to the operation mode and security level of the device to which the memory unit (2) will be connected. Thus the step of *password*/*user name, operation mode information, security features*/*levels and related crypto keys specific to various users being encrypted by a secure cryptography center and saved in at least one memory unit (2)* (101) is performed.

After the memory units (2) are filled with the required encrypted data, the prompt "connect memory unit (2)" is sent (102) by the authorization unit (4) provided on the cryptographic encryption device (6) that is intended to be used, to the interfaces of the cryptographic encryption device (6) in order to inform the user for connecting the identity card (memory unit (2)) to be used, and it is controlled whether a memory unit (2) is connected or not (103). If a memory unit (2) is not connected, this control (103) is performed again and the system repeats this control by returning to the beginning until a memory (2) is connected. When a connected memory unit (2) is found, a mutual cryptographic identity verification is performed between the authorization unit (4) and the memory unit (2) (104); and if the step of "is cryptographic identity verification successful?" (105) produces a positive result, the method (100) is continued, whereas if it produces a negative result, "invalid memory unit (2)" warning is sent by the authorization unit (4) to the interfaces of the cryptographic encryption device (6) (106). Then, the method (100) is returned to the step of *the authorization unit (4) sending the prompt "connect memory unit* (2)" *to the cryptographic encryption device (6) interfaces* (102).

After this stage, access to the memory unit (2), whose content is completely encrypted, and which is connected to the device that it will be used in, is possible only when the user enters the correct password. The password/user name pair input via the interfaces is transmitted to the memory unit (2) (107). If the related security level password is input correctly, crypto of the information in the related data field (3) is decrypted by the memory unit (2) and access is allowed to the information in this field (109). If the password is not input correctly and the data in the memory unit (2) could not be accessed, "unauthorized memory unit (2)" warning is sent by the authorization unit (4) to the interfaces of the cryptographic encryption device (6) (110) and the method (100) is returned to the step of *the authorization unit (4) sending the prompt "connect memory unit* (2)" *to the cryptographic encryption device (6) interfaces* (102).

If the password is correct, the processing unit (5) in the device (6) that is intended to be used is configured such that it will perform the functions that can be used by the authorization given to this user in advance, in accordance with the information (operation mode information, security features/levels and related crypto keys) accessed from the memory unit (2) (111).

This way, users of devices, which are able to operate in multiple operation modes or multiple security levels, can be authorized by centrally programmed memory units (2). Different operation modes and security levels can be activated on the device (6) by using the same memory unit (2) upon entering different passwords.

Collection of all authorization levels in a single memory unit (2) provides a more practical use of the memory unit (2). All operations related to the device will be able to be performed by using a single memory unit (2) again with different authorizations (different passwords). By means of this authorization mechanism which will be assigned centrally and incorporated into the devices (6) by the memory unit (2), the opportunity of customization of software based devices supporting multiple operation and security modes according to the users is provided by defining different authorization levels that are activated by different passwords according to authorization levels.

Use of the memory unit (2) also reduces the cost since it will decrease the number of memory units (2) required to be used. Additionally, by means of the memory unit (2) used as identity card in the electronic authorization system (1), operation and security modes of all of the devices (6) in the system will be centrally set up in an absolutely secure manner without requiring any software and configuration change in the devices (6).

Thus, since the invention eliminates the requirement of software change and configuration change in the use of different security and operation modes in especially software based devices, advantages are provided in the system/device installation and maintenance processes; and while providing these advantages to the system no security weaknesses are caused.

Within the scope of this basic concept, it is possible to develop various embodiments of the inventive electronic authorization system (1) and method (100). The invention can not be limited to the examples described herein and it is essentially as defined in the claims.

## Claims

1. An electronic authorization system (1); which authorizes with a single type of electronic identity module (EIM) the mode and security level options on a device by different passwords, and enables to activate different mode and options for different users; **comprising**
- at least one cryptographic encryption device (6) which is adapted to perform the cryptographic encryption processes according to specific algorithms and which has input/output systems such as a monitor, keyboard, printer;
- at least one processing unit (5) which is provided on the cryptographic encryption device (6) and is adapted to perform cryptographic encryption processes; and **characterized by**
- at least one removable memory unit (2) which is used in user verification as electronic identity module (EIM), and which has at least one data field (3) adapted such that user name and password, operation mode information, security features and the related crypto keys of at least one user can be saved thereon,
- at least one authorization unit (4); which is adapted to read the operation mode information, security level and the related crypto keys from the data field concerning verification of the user whose password is kept in the data field (3), organize operation of the processing unit (5) according to them and authorize the user accordingly.

2. An electronic authorization system (1) according to Claim 1, **characterized by** a memory unit (2) which is adapted to be activated only after mutual cryptographic identity verification with the authorization unit (4) located on the cryptographic encryption device (6) in which it will be employed.

3. An electronic authorization system (1) according to Claim 1, **characterized by** an authorization unit (4) which is adapted to transmit the user name/password pair input via the input/output units connected to the cryptographic encryption device (6) to the memory unit (2).

4. An electronic authorization system (1) according to any of the preceding claims, **characterized by** a memory unit (2) which is adapted to keep the user name and password, operation mode information, security level and related crypto keys determined specifically for each user in the related data field (3) in an encrypted form by different keys.

5. An electronic authorization system (1) according to any of the preceding claims, **characterized by** a memory unit (2) which has cryptographic security mechanisms and which is adapted to allow access to the information related to the user only if the user name and password coming from the authorization unit (4) agree with the ones in the data field.

6. An electronic authorization system (1) according to any of the preceding claims, **characterized by** a memory unit (2) which is a hardware module having a data field (3) comprising a 1Kbit-256Kbit EEPROM memory.

7. An electronic authorization system (1) according to any of the preceding claims, **characterized by** a memory unit (2) which is connected with the authorization unit (4) via electrical contacts.

8. An electronic authorization system (1) according to any of the preceding claims, **characterized by** a memory unit (2) which is a chip card.

9. An electronic authorization system (1) according to any of the preceding claims, **characterized by** a processing unit (5) which is a processor which performs a hardware and/or software encryption process.

10. An electronic authorization system (1) according to any of the preceding claims, **characterized by** an authorization unit (4) which is adapted to configure and activate the desired algorithm(s) in the processing unit (5) so as to perform the operations authorized by the operation mode information, security features and related crypto keys which can be accessed and read by means of user name/password pair verification in the memory unit (2).

11. An electronic authorization method (100), which enables operation of an electronic authorization system (1) according to any of the preceding claims, and **characterized by** the steps of
- password/user name, operation mode information, security features/levels and related crypto keys specific to various users being encrypted by a secure cryptography center and saved in at least one memory unit (2) (101),
- the authorization unit (4) sending the prompt "connect memory unit (2)" to the cryptographic encryption device (6) interfaces (102),
- is the memory unit (2) connected to the authorization unit (4)? (103),
- performing mutual cryptographic identity verification between the memory unit (2) and the authorization unit (4) (104),
- is the cryptographic identity verification successful? (105),
- the authorization unit (4) sending the warning "invalid memory unit (2)" to the cryptographic encryption device (6) interfaces (106),
- sending the user name/password pair input via the cryptographic encryption device (6) interfaces to the memory unit (2) (107),
- is the user name/password pair correct? (108),
- crypto of the information in the related data field (3) being decrypted by the memory unit (2) and allowing access to the information in this field (109),
- the authorization unit (4) sending the warning "unauthorized memory unit (2)" to the cryptographic encryption device (6) interfaces (110),
- configuring the processing unit (5) such that it will perform the functions that can be used by the authorization given to this user in advance, by means of the operation mode information, security features/levels and related crypto keys read from the memory unit (2) (111).
